# EUROPEAN PATENT APPLICATION

(11) **EP 4 549 264 A1**
(43) Date of publication of application: **07.05.2025**
(21) Application number: 23848973.6
(22) Date of filing: 11.05.2023
(51) Int. Cl.: B60T 8/171, B60T 8/172, B60T 8/176

(54) **VEHICLE CONTROL METHOD AND APPARATUS, VEHICLE, AND STORAGE MEDIUM**

(30) Priority: 30.07.2022 CN 202210911511
(71) Applicant: Shenzhen Yinwang Intelligent Technologies Co., Ltd., Shenzhen, Guangdong 518129 (CN)
(72) Inventor: WANG, Guangyi, Shenzhen, Guangdong 518129 (CN); ZHOU, Yongyou, Shenzhen, Guangdong 518129 (CN); MA, Wentao, Shenzhen, Guangdong 518129 (CN)
(74) Representative: Gill Jennings & Every LLP
(86) International application number: PCT/CN2023/093428
(87) International publication number: WO 2024/027262

(57) **Abstract**

A vehicle (100) control method and apparatus, a vehicle (100), and a storage medium are provided. The control method includes: collecting control-related information (201); determining a road condition scenario based on the control-related information (202); determining, based on the road condition scenario, a preset braking control parameter set corresponding to the road condition scenario (203); and performing configuration based on the determined preset braking control parameter set (204). In this way, braking efficiency is improved.

## Description

This application claims priority to Chinese Patent Application No. 202210911511.3, filed with the China National Intellectual Property Administration on July 30, 2022 and entitled "VEHICLE CONTROL METHOD AND APPARATUS, VEHICLE, AND STORAGE MEDIUM", which is incorporated herein by reference in its entirety.

### TECHNICAL FIELD

Embodiments of this application relate to the field of intelligent vehicles, and in particular, to a vehicle control method and apparatus, a vehicle, and a storage medium.

### BACKGROUND

As society continuously develops, vehicles in use are on the increase, leading to more vehicles on urban roads and increasingly severe traffic problems. Various applications of a vehicle braking system ensure safety in a vehicle traveling process to a large extent. Currently, the vehicle braking system mainly adjusts and controls a pressure of a brake line, to prevent wheels from locking up and slipping in a braking process, and therefore achieve anti-lock.

A vehicle control system usually adjusts and controls the pressure of the brake line based on a preset parameter of the braking system. Currently, the vehicle control system may usually preset a parameter set, and the parameter set may include a plurality of parameters. However, it is difficult for the parameter set to match different road condition scenarios. Consequently, vehicle braking efficiency is reduced, and a traffic accident rate is increased.

### SUMMARY

Embodiments of this application provide a vehicle control method and apparatus, a vehicle, and a storage medium, to improve vehicle braking efficiency.

According to a first aspect, an embodiment of this application provides a vehicle control method, including:
collecting control-related information;
determining a road condition scenario based on the control-related information;
determining, based on the road condition scenario, a preset braking control parameter set corresponding to the road condition scenario; and
performing configuration based on the determined preset braking control parameter set.

In this embodiment of this application, a plurality of braking control parameter sets are preset in a vehicle, and corresponding braking control parameter sets are selected based on different road condition scenarios. Therefore, a vehicle braking system can select a parameter set that matches a current road condition scenario, so that good performance of the vehicle braking system is achieved, and vehicle braking efficiency can be improved.

In a possible implementation, after the determining a road condition scenario based on the control-related information, the method further includes:
sending a first information prompt based on the road condition scenario, where the first information prompt is used to prompt a user with the identified road condition scenario.

In this embodiment of this application, the user is informed of the current road condition scenario by using the information prompt, so that the user can make a pre-determining of a driving decision based on the current road condition scenario. Therefore, user experience can be improved.

In a possible implementation, after the performing configuration based on the determined preset braking control parameter set, the method further includes:
sending a second information prompt, where the second information prompt is used to inform the user that the configuration of the preset braking control parameter set determined based on the road condition scenario has taken effect.

In this embodiment of this application, the user is informed, by using the information prompt, that the configuration of the parameter set has taken effect, so that the user can wait for a long time that the configuration of the parameter set has taken effect. Therefore, user experience can be improved.

In a possible implementation, the determining a road condition scenario based on the control-related information includes:
obtaining control-related information of a plurality of channels, where each channel includes control-related information corresponding to the channel; and
determining the road condition scenario based on the control-related information of the plurality of channels.

In this embodiment of this application, the control-related information of the plurality of channels is combined, so that accuracy of determining the road condition scenario can be improved.

In a possible implementation, the control-related information includes one or more of weather information, traffic information, road surface information, vehicle body interior information, and vehicle information.

In a possible implementation, the performing configuration based on the determined preset braking control parameter set includes:
in response to a detected braking operation of the user, performing configuration based on the determined preset braking control parameter set; and
after the performing configuration based on the determined preset braking control parameter set, the method further includes:
   performing braking control based on the configured preset braking control parameter set.

In this embodiment of this application, configuration on the parameter set is performed after the braking operation of the user is detected, so that frequent configuration of the parameter set can be avoided. Therefore, less resources are used.

In a possible implementation, after the performing configuration based on the determined preset braking control parameter set, the method further includes:
in response to a detected braking operation of the user, performing braking control based on the configured preset braking control parameter set.

In this embodiment of this application, configuration on the parameter set is performed before the braking operation of the user, so that the braking operation of the user can be responded as soon as possible. Therefore, braking performance of the vehicle is improved.

In a possible implementation, the vehicle travels on a first road surface, and the method further includes:
determining that the vehicle is to travel onto a second road surface from the first road surface;
in response to the detected braking operation of the user, performing braking control based on a first parameter set, where the first parameter set is a preset braking control parameter set configured when the vehicle travels on the first road surface;
determining a second parameter set, where the second parameter set is a preset braking control parameter set configured when the vehicle travels on the second road surface;
in response to detecting that the vehicle travels to a joint between the first road surface and the second road surface, switching from the first parameter set to the second parameter set; and
performing braking control based on the second parameter set.

In this embodiment of this application, the parameter set can be effectively switched when the vehicle travels on the mu-jump road surface, and braking control can be performed on different road surfaces by using different parameter sets. Therefore, the braking performance of the vehicle can be improved.

In a possible implementation, the method further includes:
determining, based on the road condition scenario, a preset drive control parameter set corresponding to the road condition scenario; and
performing configuration based on the determined preset drive control parameter set.

In this embodiment of this application, driving of the vehicle can be associated with a road condition on which the vehicle currently travels. Therefore, drive performance of the vehicle can be improved.

In a possible implementation, the method further includes:
in response to a detected drive operation of a user, performing drive control based on the configured preset drive control parameter set.

In this embodiment of this application, configuration on the parameter set is performed before the drive operation of the user, so that a braking operation of the user can be responded as soon as possible. Therefore, drive performance of the vehicle is improved.

In a possible implementation, the vehicle travels on a first road surface, and the method further includes:
determining that the vehicle is to travel onto a second road surface from the first road surface;
in response to the detected drive operation of the user, performing braking control based on a first parameter set, where the first parameter set is a preset drive control parameter set configured when the vehicle travels on the first road surface;
determining a second parameter set, where the second parameter set is a preset drive control parameter set configured when the vehicle travels on the second road surface;
in response to detecting that the vehicle travels to a joint between the first road surface and the second road surface, switching from the first parameter set to the second parameter set; and
performing drive control based on the second parameter set.

In this embodiment of this application, the parameter set can be effectively switched when the vehicle travels on the mu-jump road surface, and drive control can be performed on different road surfaces by using different parameter sets. Therefore, the drive performance of the vehicle can be improved.

According to a second aspect, an embodiment of this application provides a vehicle control apparatus, including:
a collection module, configured to collect control-related information;
a determining module, configured to: determine a road condition scenario based on the control-related information; and determine, based on the road condition scenario, a preset braking control parameter set corresponding to the road condition scenario; and
a configuration module, configured to perform configuration based on the determined preset braking control parameter set.

In a possible implementation, the apparatus further includes:
an information prompt module, configured to send a first information prompt based on the road condition scenario, where the first information prompt is used to prompt a user with the identified road condition scenario.

In a possible implementation, the information prompt module is further configured to send a second information prompt, where the second information prompt is used to inform the user that the configuration of the preset braking control parameter set determined based on the road condition scenario has taken effect.

In a possible implementation, the determining module is specifically configured to:
obtain control-related information of a plurality of channels, where each channel includes control-related information corresponding to the channel; and
determine the road condition scenario based on the control-related information of the plurality of channels.

In a possible implementation, the control-related information includes one or more of weather information, traffic information, road surface information, vehicle body interior information, and vehicle information.

In a possible implementation, the configuration module is specifically configured to: in response to a detected braking operation of the user, perform configuration on the determined preset braking control parameter set; and
the apparatus further includes:
a braking module, configured to perform braking control based on the configured preset braking control parameter set.

In a possible implementation, the braking module may be further configured to: in response to a detected braking operation of the user, perform braking control based on the configured preset braking control parameter set.

In a possible implementation, the braking module may be further configured to: when a vehicle travels on a first road surface, determine that the vehicle is to travel onto a second road surface from the first road surface;
in response to the detected braking operation of the user, perform braking control based on a first parameter set, where the first parameter set is a preset braking control parameter set configured when the vehicle travels on the first road surface;
determine a second parameter set, where the second parameter set is a preset braking control parameter set configured when the vehicle travels on the second road surface;
in response to detecting that the vehicle travels to a joint between the first road surface and the second road surface, switch from the first parameter set to the second parameter set; and
perform braking control based on the second parameter set.

In a possible implementation, the configuration module may be further configured to:
determine, based on the road condition scenario, a preset drive control parameter set corresponding to the road condition scenario; and
perform configuration based on the determined preset drive control parameter set.

In a possible implementation, the apparatus further includes:
a drive module, configured to: in response to a detected drive operation of a user, perform drive control based on the configured preset drive control parameter set.

In a possible implementation, the drive module is further configured to: when a vehicle travels on a first road surface, determine that the vehicle is to travel onto a second road surface from the first road surface;
in response to the detected drive operation of the user, perform braking control based on a first parameter set, where the first parameter set is a preset drive control parameter set configured when the vehicle travels on the first road surface;
determine a second parameter set, where the second parameter set is a preset drive control parameter set configured when the vehicle travels on the second road surface;
in response to detecting that the vehicle travels to a joint between the first road surface and the second road surface, switch from the first parameter set to the second parameter set; and
perform drive control based on the second parameter set.

According to a third aspect, an embodiment of this application provides a vehicle, including a processor and a memory, where the memory is configured to store a computer program, and the processor is configured to run the computer program, to implement the vehicle control method according to the first aspect.

According to a fourth aspect, an embodiment of this application provides a computer-readable storage medium, where the computer-readable storage medium stores a computer program, and when the computer program is run on a computer, the computer is enabled to implement the vehicle control method according to the first aspect.

According to a fifth aspect, an embodiment of this application provides a computer program product, where the computer program product includes a computer program, and when the computer program is executed by a computer, the computer is enabled to implement the vehicle control method according to the first aspect.

In a possible design, all or some of programs in the fifth aspect may be stored in a storage medium that is encapsulated with a processor, or some or all of the programs may be stored in a memory that is not encapsulated with the processor.

### BRIEF DESCRIPTION OF DRAWINGS

FIG. 1 is a diagram of a hardware structure of a vehicle according to an embodiment of this application;
FIG. 2 is a schematic flowchart of an embodiment of a vehicle control method according to this application;
FIG. 3 is a diagram of information collection according to an embodiment of this application;
FIG. 4 is a diagram of a weight value change according to an embodiment of this application;
FIG. 5 is a diagram of an embodiment of braking control effect according to this application;
FIG. 6 is a diagram of an embodiment of drive control effect according to this application;
FIG. 7 is a schematic flowchart of another embodiment of a vehicle control method according to this application;
FIG. 8 is a diagram of another embodiment of braking control effect according to this application;
FIG. 9 is a diagram of an application scenario according to an embodiment of this application;
FIG. 10 is a diagram of braking effect in the conventional technology;
FIG. 11 is a diagram of still another embodiment of braking control effect according to this application;
FIG. 12 is a diagram of another embodiment of drive control effect according to this application; and
FIG. 13 is a diagram of a structure of a vehicle control apparatus according to an embodiment of this application.

### DESCRIPTION OF EMBODIMENTS

In embodiments of this application, unless otherwise specified, the character "/" indicates an "or" relationship between associated objects. For example, A/B may represent A or B. The term "and/or" describes an association relationship between associated objects, and represents that three relationships may exist. For example, A and/or B may represent the following three cases: Only A exists, both A and B exist, and only B exists.

It should be noted that, in embodiments of this application, terms such as "first" and "second" are merely intended for distinction in description, and shall not be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof means any combination of these items, including a single item (piece) or any combination of a plurality of items (pieces). For example, at least one of A, B, or C may represent A, B, C, A and B, A and C, B and C, or A, B, and C. A, B, and C each may be an element, or may be a set that includes one or more elements.

In embodiments of this application, "example", "in some embodiments", "in another embodiment", or the like represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" shall not be used together with "less than"; and when "equal to" is used together with "less than", "equal to" shall not be used together with "greater than".

As society continuously develops, vehicles in use are on the increase, leading to more vehicles on urban roads and increasingly severe traffic problems. Various applications of a vehicle braking system ensure safety in a vehicle traveling process to a large extent. Currently, the vehicle braking system mainly adjusts and controls a pressure of a brake line, to prevent wheels from locking up and slipping in a braking process, and therefore achieve anti-lock.

A vehicle control system usually adjusts and controls the pressure of the brake line based on a preset parameter of the braking system. Currently, the vehicle control system may usually preset a parameter set, and the parameter set may include a plurality of parameters. However, it is difficult for the parameter set to match different road condition scenarios. Consequently, vehicle braking efficiency is reduced, and a traffic accident rate is increased.

Based on the foregoing problems, an embodiment of this application provides a vehicle control method, which is applied to a vehicle. A plurality of parameter sets used for braking control may be preset in the vehicle. Parameter names and a total quantity of parameters in each braking control parameter set may be the same, but values of the parameters in each braking control parameter set may be different. In this way, each braking control parameter set may match different road condition scenarios, so that the vehicle may select a braking control parameter set that matches a current road condition during braking. Therefore, good braking performance of the vehicle can be achieved, and braking efficiency of the vehicle can be improved. It may be understood that, the vehicle may further preset a plurality of drive control parameter sets, to select a matched drive control parameter set in different road condition scenarios, so that the vehicle achieves good drive performance.

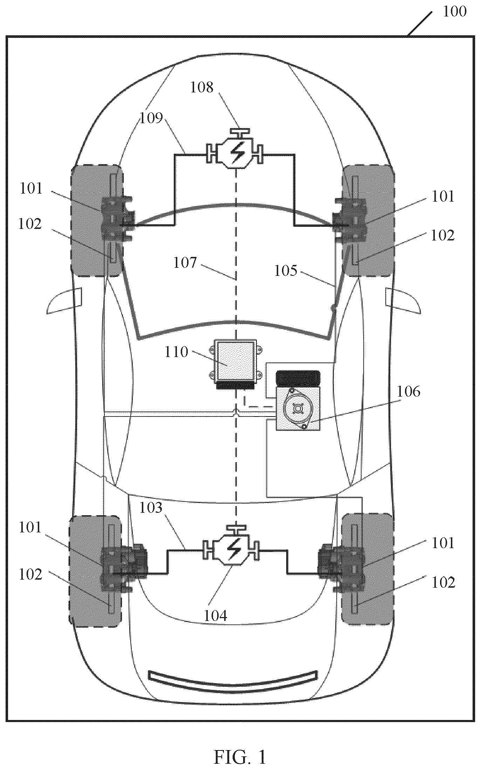

With reference to FIG. 1, the following first describes an example of a vehicle provided in the following embodiments of this application. FIG. 1 is a diagram of a structure of a vehicle 100.

As shown in FIG. 1, the vehicle 100 includes brake calipers 101, brake rotors 102, a rear drive axle 103, a rear drive motor 104, a brake hose 105, an integrated booster 106, a chassis communication line 107, a front drive motor 108, a front drive axle 109, and a body control module 110.

The integrated booster 106 is a core of a braking system, and integrates an electronic control unit (electronic control unit, ECU), a pedal stroke sensor, a brake master cylinder, a motor, a push rod mechanism, and the like. A brake pedal is rigidly connected to the integrated booster 106, and the integrated booster 106 is connected to the brake caliper 101 through the brake hose 105.

The body control module 110 is a core of a drive system, and is separately connected to the front drive motor 108 and the rear drive motor 104 through controller area network (controller area network, CAN) communication. The front drive motor 108 is connected to wheels through the front drive axle 109, and the rear drive motor 104 is connected to wheels through the rear drive axle 103.

In a drive implementation process, a driver steps on an electronic throttle. The body control module 110 collects an opening of the electronic throttle, calculates torque commands for the front and rear motors, and sends the torque commands to drive motor control units (motor control units, MCUs) of the front drive motor 108 and the rear drive motor 104 through the CAN. The front drive motor 108 and the rear drive motor 104 generate torque, and are connected to the wheels through the front drive axle 109 and the rear drive axle 103, to drive the wheels to run forward.

In a braking implementation process, the driver steps on a brake pedal, and the push rod mechanism of the integrated booster 106 generates displacement. The pedal stroke sensor detects the displacement of the push rod mechanism, and sends a displacement signal to the ECU. The ECU calculates torque that should be generated by the motor, and then a transmission mechanism of the motor converts the torque into a braking force. A push rod force generated by the brake pedal through the push rod mechanism and the braking force act together on the brake master cylinder, and are converted into a hydraulic pressure in the brake master cylinder. Brake fluid with the hydraulic pressure acts on the brake caliper 101 through the brake hose 105, and braking is implemented by clamping the brake rotor 102.

When the braking and the driving need to be coordinated, the body control module 110 may receive a drive command of the integrated booster 106, and a drive command obtained through calculation is sent to the front drive motor 108 and the rear drive motor 104 separately to execute modified drive torque.

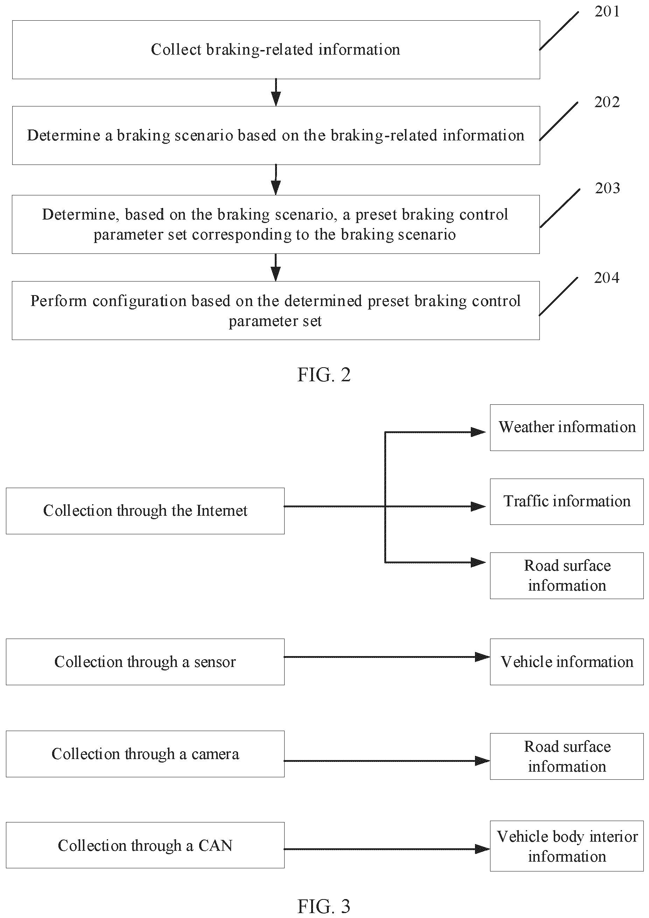

A vehicle control method provided in embodiments of this application is described herein with reference to FIG. 2 to FIG. 12 by using examples.

FIG. 2 is a schematic flowchart of an embodiment of a vehicle control method according to this application. The method specifically includes the following steps.

Step 201: Collect control-related information.

Specifically, a vehicle 100 may collect the control-related information in a traveling process. The control-related information may be used to determine a road condition scenario, and the road condition scenario is used to determine a braking control parameter set. The road condition scenario may be a scenario that the vehicle 100 is currently in. For example, the road condition scenario may be an icy surface, a snowy surface, a wet and slippery road surface, a concrete road surface, an asphalt road surface, or the like. It may be understood that the foregoing examples merely illustrate a plurality of types of road condition scenarios, but do not constitute a limitation on embodiments of this application. In some embodiments, another type of road condition scenario may be further included. The braking control parameter set may be a parameter set used to configure various parameters of a braking control system of the vehicle 100. The braking control parameter set may include a plurality of parameters. For example, the parameters may include a target pressure increase gradient (IncPreTar), a target pressure decrease gradient (DecPreTar), a slip rate threshold (SlipThre), a mu-jump road surface detection and confirmation time (tCntMueJump), a mu-split road surface detection and confirmation time (tCntSplit), and a low-adhesion road surface detection and confirmation time (tCntLowMue). It may be understood that the foregoing examples merely illustrate names of the plurality of parameters in the parameter set, but do not constitute a limitation on embodiments of this application. In some embodiments, another parameter may be further included. The control-related information may be related information collected by the vehicle 100 through various channels. For example, the control-related information may include weather information, traffic information, road surface information, vehicle body interior information, vehicle information, and the like. It may be understood that the foregoing channels for collection may be a camera, a sensor, the Internet, and a CAN for directly obtaining information about the vehicle. This is not specifically limited in this application.

A process in which the vehicle 100 collects the control-related information is described with reference to FIG. 3 by using an example. As shown in FIG. 3, for example, the vehicle 100 may obtain control-related information such as the weather information, the traffic information, and the road surface information through the Internet (for example, high-definition map software, an in-vehicle cloud, or an internet of vehicles). The weather information may include information such as a temperature, humidity, a wind speed, rain, snow, and frost. The traffic information may include information such as a geographical location and a road identifier. The road surface information may include information such as a road surface type, for example, a concrete road surface or an asphalt road surface. For another example, the vehicle 100 may further collect control-related information such as the vehicle information through the sensor. The vehicle information may include information such as a vehicle speed, a wheel speed, a steering wheel, a longitudinal acceleration of the vehicle, a yaw rate of the vehicle, an acceleration pedal, a brake pedal, and pressures of a brake master cylinder and a wheel cylinder. For still another example, the vehicle 100 may further collect control-related information such as the road surface information through a vehicle-mounted camera. For yet another example, the vehicle 100 may further collect control-related information such as the vehicle body interior information in a body control module (body control module, BCM) through the CAN. The vehicle body interior information may include rainfall sensor information, wiper frequency information, and the like.

Step 202: Determine the road condition scenario based on the control-related information.

Specifically, the vehicle 100 may combine the collection manners shown in FIG. 3 to collect the control-related information. For example, the control-related information may be collected in a collection manner combining the camera and the sensor, or the control-related information may be collected in a collection manner combining the camera, the sensor, the Internet, and the CAN, or the control-related information may be collected in another combined collection manner. This is not specifically limited in embodiments of this application.

After collecting the control-related information, the vehicle 100 may determine the road condition scenario based on the control-related information. It may be understood that a main objective of determining the road condition scenario is to determine an adhesion status between a tire and a road surface. Different adhesion statuses between the tire and the road surface mean different road surface adhesion coefficients. In scenarios of different road surface adhesion coefficients, if the vehicle uses a braking control solution that matches a current road surface adhesion coefficient, so that the vehicle achieves good braking performance. It can be learned that, if each braking control solution corresponds to one braking control parameter set, different braking control parameter sets are configured for the vehicle, so that the vehicle can configure a braking control parameter based on the configured braking control parameter set. In this way, the vehicle can perform braking control based on the configured braking control parameter during braking, to achieve good braking performance of the vehicle. Therefore, a plurality of road condition scenarios and a plurality of braking control parameter sets may be preset, and a mapping relationship between the road condition scenarios and the braking control parameter sets may be set. For example, one road condition scenario corresponds to one braking control parameter set. During specific implementation, a plurality of road condition scenarios and a plurality of braking control parameter sets may be prestored in the vehicle 100, and the plurality of road condition scenarios may be in a one-to-one correspondence with the plurality of braking control parameter sets. Table 1 shows an example of the mapping relationship between the road condition scenarios and the braking control parameter sets. N is a positive integer greater than 1.

**Table 1**

| Road condition scenario | Braking control parameter set |
|---|---|
| Scenario 1 (Icy surface) | Parameter set 1 |
| Scenario 2 (Snowy surface) | Parameter set 2 |
| Scenario 3 (Wet and slippery road surface) | Parameter set 3 |
| ... | ... |
| Scenario N | Parameter set N |

It should be noted that parameters may be the same or different between the parameter sets. This is not specifically limited in embodiments of this application. When all parameters are the same between the parameter sets, a value of the parameter may be adjusted to distinguish between different parameter sets. A parameter set 1 and a parameter set 2 are used as an example. Both the parameter set 1 and the parameter set 2 include a parameter 1, a value of the parameter 1 in the parameter set 1 is x, and a value of the parameter 1 in the parameter set 2 is y, where x and y are different.

Then, a manner of determining the road condition scenario is described by using the collection manner combining the camera, the sensor, the Internet, and the CAN as an example.

After collecting control-related information A through the Internet, the vehicle 100 may identify, based on the control-related information A, an external environment in which the vehicle 100 currently runs, to identify an adhesion status between the tire of the vehicle and the road surface, and further determine first road surface information. The first road surface information represents road surface information determined by the vehicle 100 based on the control-related information A. For example, the vehicle 100 may identify a difference between a road surface in the north and a road surface in the south based on geographical location information in the control-related information A. A road surface material may be used to distinguish between adhesion between a tire and different road surfaces. The vehicle 100 may obtain, with reference to weather information in the control-related information A, an adhesion status affected by weather. For example, usually, an adhesion coefficient of a dry concrete road surface is about 0.8, an adhesion coefficient of a wet concrete road surface is about 0.7, an adhesion coefficient of a dry asphalt road surface is about 0.9, an adhesion coefficient of a wet asphalt road surface is about 0.8, an adhesion coefficient of a polished icy surface is about 0.2, and an adhesion coefficient of a compacted snowy road surface is about 0.5. It may be understood that the foregoing examples merely illustrate values of road surface adhesion coefficients in different road condition scenarios, but do not constitute a limitation on embodiments of this application.

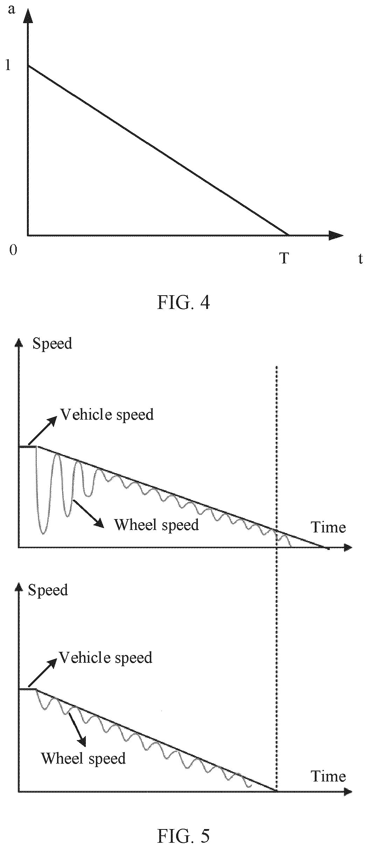

It may be understood that the manner of collecting the control-related information A through the Internet may be affected by a bandwidth. Consequently, an update speed of the control-related information A is different from that of a real-time environment. In other words, a lag in information may cause the collected information to be not completely consistent with an environment that the vehicle is currently in. It can be learned that the control-related information A collected through the Internet mainly provides global information, and a granularity of the control-related information A is coarse. As a result, the first road surface information is inaccurate. During specific implementation, a weight a may be set for the first road surface information. A value of the weight a may change with duration t in an information update period T. For example, in the information update period T, the value of the weight a decreases with an increase in the duration t. FIG. 4 is a diagram of an example in which the value of the weight a changes with the duration t.

After collecting control-related information B through the sensor, the vehicle 100 may identify, based on the control-related information B, a road surface that the vehicle 100 is currently on, that is, obtain second road surface information. The second road surface information represents road surface information determined by the vehicle 100 based on the control-related information B. For example, the vehicle 100 may obtain a lateral motion status of the vehicle 100 based on information such as the steering wheel, a lateral acceleration, and the yaw rate. The lateral motion status may include a turning state, a lane-changing state, or the like. The vehicle 100 may also obtain a longitudinal motion status of the vehicle 100 based on the wheel speed, the vehicle speed, and the longitudinal acceleration. The longitudinal motion status may include an accelerating state, a decelerating state, an emergency braking state, or the like. Then, the road surface that the vehicle 100 is currently on may be identified based on the lateral motion status and the longitudinal motion status of the vehicle 100. For example, a special road surface such as a washboard road surface may be identified with reference to a fluctuation rule of the wheel speed. For another example, an off-road surface, a rough road surface, a gravel road surface, and the like may be further identified based on acceleration information. For still another example, a mu-jump road surface, a mu-split road surface, a checkerboard road surface, and the like may be further identified based on pressures of a master cylinder and a wheel cylinder.

It may be understood that the foregoing manner of collecting the control-related information B through the sensor is a passive detection manner, and it takes a period of time to obtain and process the information. As a result, there is a lag in the second road surface information. During specific implementation, a weight b may also be set for the second road surface information.

After collecting control-related information C through the camera, the vehicle 100 may identify, based on the control-related information C, a road surface that the vehicle 100 is currently on, that is, obtain third road surface information. The third road surface information represents road surface information determined by the vehicle 100 based on the control-related information C. For example, the vehicle 100 may collect image information around the vehicle 100 through the camera, and may input the collected image information into a preset neural network model for identification, to determine the road surface that the vehicle 100 is currently on. The preset neural network model may be pre-trained. For example, a large quantity of road surface data sets may be collected in advance to train the neural network model. The neural network model may be used to determine, based on an ambient environment of the vehicle, the road surface that the vehicle is on.

Optionally, in a process in which the vehicle 100 performs image recognition, the vehicle 100 may further correct an image recognition result, that is, the third road surface information based on weather information and feedback information of the BCM, to obtain accurate third road surface information. During specific implementation, because an image captured by the vehicle 100 through the camera is greatly affected by weather, a weight c may be set for the third road surface information based on the weather information. For example, Table 2 shows a mapping relationship between weather types and values of the weight c.

**Table 2**

| Weather type | Weight c |
|---|---|
| Sunny/Cloudy | 1 |
| Mild haze | 0.7 |
| Moderate haze | 0.5 |
| Severe haze | 0.3 |

In addition, because a line of sight at night is poor, reliability of an image captured at night is low. In other words, an image captured by the vehicle 100 through the camera is also affected by time. Therefore, a time coefficient d may also be set according to time. For example, in the daytime, a value of the time coefficient d is high. At night, a value of the time coefficient d is low.

Further, after obtaining the first road surface information, the second road surface information, and the third road surface information, the vehicle 100 may comprehensively determine the road condition scenario based on the first road surface information, the second road surface information, the third road surface information, and a weight coefficient corresponding to each road surface information. The road condition scenario may be the road surface that the vehicle 100 is currently on. For example, the road condition scenario may include an icy surface, a snowy surface, a wet and slippery road surface, a concrete road surface, an asphalt road surface, and the like.

Optionally, after determining the current road condition scenario, the vehicle 100 may further send a first information prompt to a user (for example, a driver). The first information prompt is used to prompt the driver with the identified road condition scenario. For example, the first information prompt may be displayed on a dashboard of the vehicle 100 in a form of text and/or symbol, to prompt the driver with the identified road condition scenario. For another example, the first information prompt may be sent through voice prompt, to prompt the driver with the identified road condition scenario.

Step 203: Determine, based on the road condition scenario, a preset braking control parameter set corresponding to the road condition scenario.

Specifically, after determining the current road condition scenario, the vehicle 100 may determine, based on the current road condition scenario, the preset braking control parameter set corresponding to the current road condition scenario, so that the vehicle 100 can perform configuration based on the determined preset braking control parameter set.

It may be understood that the vehicle usually travels on a good road surface, for example, a street, an overpass, or a highway in a city. In most road condition scenarios, road surfaces have good adhesion. Therefore, the vehicle 100 may preconfigure a preset braking control parameter set corresponding to the good road surface. In a traveling process of the vehicle 100, after a new road condition scenario is determined, the preset braking control parameter set may be updated to a preset braking control parameter set corresponding to the new road condition scenario.

Step 204: Perform configuration based on the determined preset braking control parameter set.

Specifically, a configuration process may be that the vehicle 100 performs configuration based on a parameter in the determined preset braking control parameter set, so that a plurality of functions of a braking system in the vehicle 100 achieve good performance. For example, the functions of the braking system may include an anti-lock braking system (anti-lock braking system, ABS), an electronic stability control (electronic stability controller, ESC) system of the vehicle body, a traction control system (traction control system, TCS), and a value added function (value added function, VAF). It may be understood that the configuration in step 204 may also be understood as a configuration update. For example, in an initial state (for example, when the user starts the vehicle), the vehicle 100 has a configuration of the initial preset braking control parameter set. After the vehicle 100 determines the new road condition scenario based on the current road surface and further determines the new preset braking control parameter set in the traveling process, the vehicle 100 may perform configuration update based on the new preset braking control parameter set.

During specific implementation, the preset braking control parameter set of the vehicle 100 may be configured in the following two manners.

Manner 1: Perform configuration before the user performs braking.

Specifically, after determining the preset braking control parameter set corresponding to the current road condition scenario, the vehicle 100 immediately configures parameters of the braking system of the vehicle 100 based on the determined preset braking control parameter set, so that the vehicle 100 can immediately perform braking control based on the configured braking control parameter set after the braking operation (for example, steeping on a brake) of the user is detected. In this way, the preset braking control parameter set can be quickly switched, and the vehicle can further perform braking control as soon as possible based on the switched preset braking control parameter set. In this way, execution efficiency of the braking control is improved.

Optionally, after configuring the preset braking control parameter set, the vehicle 100 may further send a second information prompt. The second information prompt is used to prompt the user that the configuration of the preset braking control parameter set determined based on the current road condition scenario has taken effect, and braking control performed by the vehicle based on the braking operation of the user is performed based on the configuration that has taken effect. For a sending manner of the second information prompt, refer to the sending manner of the first information prompt. Details are not described herein again.

Manner 2: Perform configuration after the user performs braking.

Specifically, after the vehicle 100 determines the preset braking control parameter set corresponding to the current road condition scenario, the user does not immediately perform braking. For example, in some actual scenarios, in a traveling process in a first time period, after the vehicle 100 identifies a road condition scenario of the first time period, the user does not perform braking. However, in a traveling process in a second time period, the road condition scenario changes. In this case, the user still does not perform braking. If the vehicle 100 performs configuration after determining the preset braking control parameter set corresponding to the current road condition scenario, the vehicle 100 may frequently switch the preset braking control parameter set. As a result, processing load of the vehicle 100 is increased. It can be learned that the vehicle 100 may not configure parameters of the braking system of the vehicle 100 based on the currently determined preset braking control parameter set. The vehicle 100 may update the current road condition scenario based on collected control-related information in the traveling process. Therefore, the vehicle 100 may perform configuration based on the currently determined preset braking control parameter set after the braking operation of the user is detected, so that the vehicle 100 can perform braking control after the preset braking control parameter set is configured. In this way, good braking performance of the braking system of the vehicle 100 can be achieved, and processing load of the vehicle can also be reduced.

FIG. 5 is a diagram of braking effect in a uniform low-adhesion road condition scenario, that is, a diagram of braking effect when a vehicle travels on a low-adhesion road surface. As shown in FIG. 5, the upper figure is a schematic curve of braking effect in the conventional technology. It may be understood that, after a driver steps on a brake pedal, an ABS function is involved. A controller distinguishes between road surfaces based on wheel locking conditions. Therefore, the controller can identify a current road surface only when a wheel tends to be locked first. In this scenario, this manner is passive. To ensure robustness, confirmation generally needs to be performed in a plurality of periods. Therefore, a locking rate in a first ABS cycle is high. After wheel speed feedback in several periods is obtained, pressure adjustment may be performed for a target slip rate on the low-adhesion road surface. The lower figure is a schematic curve of braking effect according to an embodiment of this application. Based on a concept of this application, road surface information can be obtained in advance, and a locking pressure on a current road surface can be obtained when the road surface is known. Therefore, a braking control parameter set for a corresponding road surface is configured, to control pressures of four wheel cylinders to be close to the locking pressure. A pressure adjustment fluctuation is slight. Therefore, adhesion of the road surface can be utilized to a maximum extent, and a braking distance can be shortened.

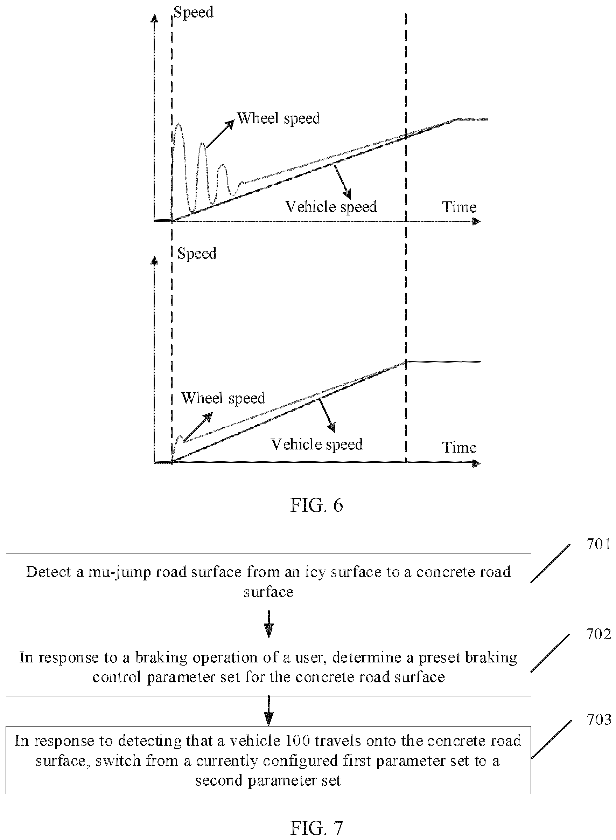

The foregoing describes, by using FIG. 2 to FIG. 5, the scenario in which the vehicle performs braking when traveling on the uniform road surface. Next, a scenario in which the vehicle accelerates when traveling on the uniform road surface is described by using FIG. 6. It may be understood that a parameter set configured in an acceleration scenario may be different from that configured in a braking scenario. For example, the parameter set configured in the braking scenario is a braking control parameter set, and the parameter set configured in the acceleration scenario may be a drive control parameter set. However, this does not constitute a limitation on embodiments of this application. The drive control parameter set may also be in a one-to-one correspondence with the road condition scenario. For a configuration manner of the drive control parameter set, refer to the configuration manner of the braking control parameter set. Details are not described herein again. FIG. 6 is a diagram of acceleration effect in a low-adhesion scenario. As shown in FIG. 6, the upper figure is a schematic curve of acceleration effect in the conventional technology. It may be understood that, after the driver steps on an acceleration pedal, a drive wheel slips, and a TCS function is involved. The controller distinguishes between road surfaces based on wheel slipping conditions. Therefore, the controller can identify the current road surface only when the wheel slips first. In this scenario, this manner is passive. To ensure robustness, confirmation needs to be performed in a plurality of periods. Therefore, a slip rate in a first TCS cycle is high. After wheel speed feedback in the plurality of periods is obtained, TCS control may be performed for the target slip rate on the low-adhesion road surface. The lower figure is a schematic curve of acceleration effect according to an embodiment of this application. Based on a concept of this application, road surface information can be obtained in advance, and an adhesion status of a current road surface can be obtained when the road surface is known. A driving force required for the current road surface on which the wheel is about to slip without actually slipping can be obtained based on an adhesion coefficient of the current road surface. A drive control parameter set for a corresponding road surface is configured, to control the driving force to meet a target value in the foregoing desirable slipping condition, so that the wheel is not slipped, and adhesion utilization can be improved. Therefore, drive performance can be improved.

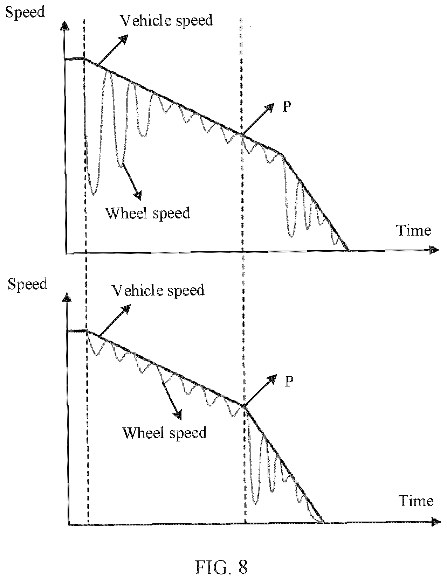

Next, the following further describes, by using FIG. 7 and FIG. 8, a scenario in which the vehicle travels on a mu-jump road surface. The mu-jump road surface is a road surface on which an adhesion difference between road surfaces in contact with front and rear wheels is large. An example in which the front wheels are on a concrete road surface and the rear wheels are on an icy surface is used for description. In other words, this scenario may be a scenario in which the vehicle 100 travels from the icy surface to the concrete road surface.

In this embodiment of this application, in a process in which the vehicle 100 travels from the icy surface to the concrete road surface, road surface information of the concrete road surface may be obtained in advance, so that a preset braking control parameter set for the concrete road surface can be determined in advance, and the preset braking control parameter set for the concrete road surface can be configured in time when the vehicle 100 travels onto the concrete road surface. In this way, the vehicle 100 can perform braking control in time based on a road condition scenario of the concrete road surface after traveling onto the concrete road surface. Therefore, braking performance and braking efficiency of the vehicle can be improved.

FIG. 7 is a schematic flowchart of another embodiment of a vehicle control method according to this application. The method specifically includes the following steps.

Step 701: Detect a mu-jump road surface from an icy surface to a concrete road surface.

Specifically, when a vehicle 100 travels on the icy surface, ambient environment information may be obtained, for example, real-time monitoring may be performed through a camera. In addition, the vehicle 100 may further determine, based on the collected ambient environment information, that the vehicle 100 is to travel from the icy surface to the concrete road surface. For example, the vehicle 100 may perform recognition based on an image captured by the camera, and therefore may identify that the vehicle 100 is to travel onto the concrete road surface from the current icy surface.

Step 702: In response to a braking operation of a user, determine a preset braking control parameter set for the concrete road surface.

Specifically, when the vehicle 100 travels on the icy surface, a preset braking control parameter set corresponding to the icy surface may be configured. For ease of description, the preset braking control parameter set corresponding to the icy surface is referred to as a "first parameter set" below. In this case, the user may perform braking, for example, step on a brake pedal. In response to a detected braking operation of the user (for example, a driver), the vehicle 100 may perform braking control based on the configured first parameter set, and may determine the preset braking control parameter set corresponding to the concrete road surface. For ease of description, the preset braking control parameter set corresponding to the concrete road surface is referred to as a "second parameter set" below. In this case, the vehicle 100 may buffer the second parameter set, so that the vehicle 100 can configure the second parameter set after traveling onto the concrete road surface.

Step 703: In response to detecting that the vehicle 100 travels onto the concrete road surface, switch from the currently configured first parameter set to the second parameter set.

Specifically, when the vehicle 100 travels to a joint between the icy surface and the concrete road surface, the vehicle 100 may determine that the vehicle 100 travels onto the concrete road surface. For example, when front wheels of the vehicle 100 reach the joint between the icy surface and the concrete road surface, it may be considered that the vehicle 100 travels to the joint between the icy surface and the concrete road surface. During specific implementation, the vehicle 100 may perform recognition based on the image captured by the camera, and therefore may identify that the vehicle 100 travels onto the concrete road surface. In response to detecting that the vehicle 100 travels onto the concrete road surface, the road surface changes, and an adhesion coefficient of the road surface changes accordingly. In this case, the vehicle 100 may switch from the currently configured first parameter set to the second parameter set. In other words, when the vehicle 100 travels on the icy surface, the first parameter set is configured, and when the vehicle 100 travels to the joint between the icy surface and the concrete road surface, the second parameter set may be configured, so that the vehicle 100 can perform braking control based on the second parameter set. For example, braking may be performed on the front wheels of the vehicle 100 based on a configuration of the second reference set, so that braking performance of the vehicle 100 matches the concrete road surface. In this way, the braking performance of the vehicle 100 can be better achieved, and a braking distance is shortened. FIG. 8 is a diagram of braking effect according to an embodiment of this application. As shown in FIG. 8, the upper figure is a schematic curve of braking effect in the conventional technology, and the lower figure is a schematic curve of braking effect in this application. It can be learned from comparison between the two figures that, when the vehicle 100 travels to a joint P between the icy surface and the concrete road surface, in the conventional technology, several periods are required to determine, based on a slip rate, that the current road surface has changed. Consequently, performing braking by the vehicle 100 by using a good braking solution is delayed, and the braking distance is increased. This brings a security risk to the vehicle. However, in this application, when the vehicle 100 travels to the joint P between the icy surface and the concrete road surface, the current braking control parameter set may be immediately switched to the braking control parameter set corresponding to the concrete road surface, that is, switched to the second parameter set. In this way, the vehicle 100 can achieve good braking performance, and the braking distance is shortened. This can improve safety of the vehicle.

It should be noted that the foregoing example merely illustrates a scenario in which mu-jump road surfaces are the icy surface and the concrete road surface, but does not constitute a limitation on embodiments of this application. In some embodiments, the mu-jump road surface may be another mu-jump road surface. For example, the mu-jump road surfaces may be an icy surface and an asphalt road surface. Alternatively, the mu-jump road surfaces may be a concrete road surface and an asphalt road surface, or the mu-jump road surfaces may be a gravel road surface and a concrete road surface.

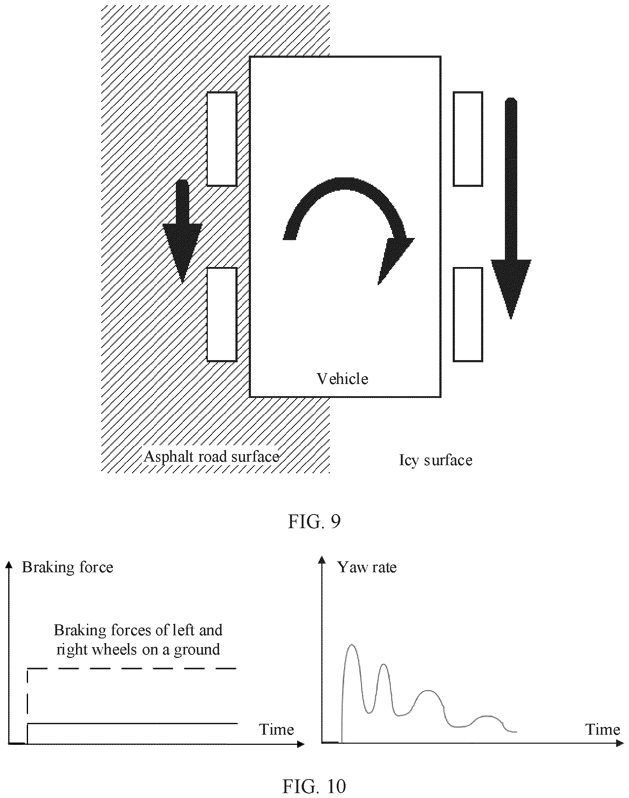

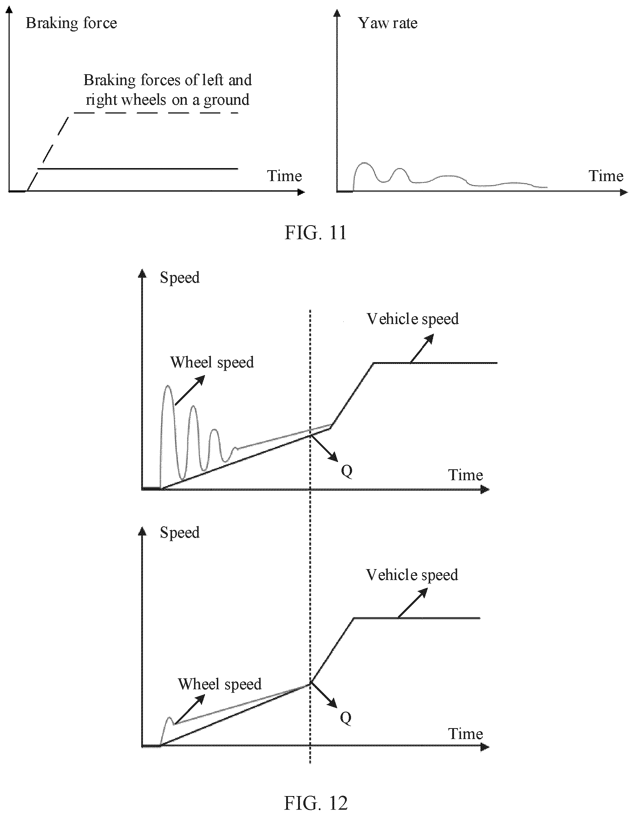

Next, a scenario in which the vehicle travels on a mu-split road surface is further described by using FIG. 9 to FIG. 11. The mu-split road surface is a road surface on which an adhesion difference between road surfaces in contact with left and right wheels is large, and may also be referred to as a µ-split road surface. FIG. 9 is a diagram of an application scenario of a mu-split road surface according to an embodiment of this application. As shown in FIG. 9, left wheels of the vehicle 100 are on an icy surface, and right wheels are on an asphalt road surface. When the vehicle 100 performs braking, friction between the icy surface and the left wheel is small, and friction between the asphalt road surface and the right wheel is large. Therefore, the vehicle 100 instantaneously generates a clockwise yaw moment. A larger pressure difference between the left and right wheels indicates a larger yaw moment generated. A large yaw rate may be generated for the entire vehicle. If the driver fails to respond in time, the vehicle 100 deviates towards one direction. In an extreme case, the vehicle 100 instantaneously turns around. This is extremely dangerous. FIG. 10 is a diagram of braking effect in the conventional technology. As shown in FIG. 10, after the vehicle performs braking, a difference between the left and right wheels is large. Consequently, the vehicle generates a large yaw rate. This brings a security risk to driving. FIG. 11 is a diagram of braking effect according to this application. As shown in FIG. 11, when the mu-jump road surface is identified in advance, a slope of an increase in a pressure difference between the left and right wheels is limited, to limit a slope of the yaw moment. Therefore, the yaw rate generated on the vehicle can be reduced. This can provide the driver with sufficient reaction time to maintain stability of the vehicle.

The foregoing describes, by using FIG. 7 to FIG. 11, the scenarios in which the vehicle performs braking when traveling on the mu-jump road surface and the mu-split road surface. Next, a scenario in which the vehicle accelerates when traveling on a mu-jump road surface is described by using FIG. 12. An example in which the vehicle travels from a low-adhesion road surface to a high-adhesion road surface is used for description. For example, the vehicle may travel from an icy surface to an asphalt road surface. It may be understood that, for a configuration manner of a drive control parameter set for the mu-jump road surface, refer to the foregoing configuration manner of the braking control parameter set. Details are not described herein again. As shown in FIG. 12, the upper figure is a schematic curve of driving effect in the conventional technology. When the front wheels reach a joint Q, the wheels enter the high-adhesion road surface from the low-adhesion road surface. A slip rate of the wheel traveling onto the high-adhesion road surface with a driving force for the low-adhesion road surface is low. As a result, a controller cannot determine whether the wheel is on the low-adhesion road surface or the high-adhesion road surface, and consequently can only slightly increase the driving force to determine, based on the slip rate, whether the wheel has traveled onto high-adhesion road surface. If the increased driving force is large, but the wheel is still on the low-adhesion road surface, the next step is to reduce the driving force. Consequently, TCS torque fluctuation is large. If the increased driving force is small, but the wheel is already on the high-adhesion road surface, it takes a long time to determine that the wheel is already on the high-adhesion road surface. Consequently, there is a serious lag, and some drive performance is lost. The lower figure is a schematic curve of driving effect of this application. In this embodiment of this application, road surface information is obtained in advance, so that joint information can be obtained in advance. After the high-adhesion road surface is identified, the drive control parameter set for the mu-jump road surface may be configured, to configure a torque that needs to be increased for a TCS on the mu-jump road surface. Therefore, adhesion of the road surface can be utilized to a maximum extent, and drive performance can be improved.

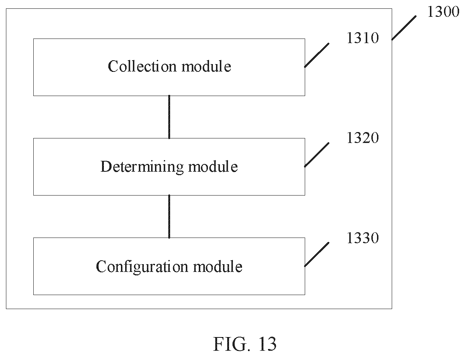

FIG. 13 is a diagram of a structure of an embodiment of a vehicle control apparatus according to this application. As shown in FIG. 13, a vehicle control apparatus 1300 may include a collection module 1310, a determining module 1320, and a configuration module 1330, where
the collection module 1310 is configured to collect control-related information;
the determining module 1320 is configured to: determine a road condition scenario based on the control-related information; and determine, based on the road condition scenario, a preset braking control parameter set corresponding to the road condition scenario; and
the configuration module 1330 is configured to perform configuration based on the determined preset braking control parameter set.

In a possible implementation, the vehicle control apparatus 1300 further includes:
an information prompt module, configured to send a first information prompt based on the road condition scenario, where the first information prompt is used to prompt a user with the identified road condition scenario.

In a possible implementation, the information prompt module is further configured to send a second information prompt, where the second information prompt is used to inform the user that a configuration of the preset braking control parameter set determined based on the road condition scenario has taken effect.

In a possible implementation, the determining module 1320 is specifically configured to:
obtain control-related information of a plurality of channels, where each channel includes control-related information corresponding to the channel; and
determine the road condition scenario based on the control-related information of the plurality of channels.

In a possible implementation, the control-related information includes one or more of weather information, traffic information, road surface information, vehicle body interior information, and vehicle information.

In a possible implementation, the configuration module 1330 is specifically configured to: in response to a detected braking operation of the user, perform configuration on the determined preset braking control parameter set; and
the vehicle control apparatus 1300 further includes:
a braking module, configured to perform braking control based on the configured preset braking control parameter set.

In a possible implementation, the braking module may be further configured to: in response to a detected braking operation of the user, perform braking control based on the configured preset braking control parameter set.

In a possible implementation, the braking module may be further configured to: when a vehicle travels on a first road surface, determine that the vehicle is to travel onto a second road surface from the first road surface;
in response to the detected braking operation of the user, perform braking control based on a first parameter set, where the first parameter set is a preset braking control parameter set configured when the vehicle travels on the first road surface;
determine a second parameter set, where the second parameter set is a preset braking control parameter set configured when the vehicle travels on the second road surface;
in response to detecting that the vehicle travels to a joint between the first road surface and the second road surface, switch from the first parameter set to the second parameter set; and
perform braking control based on the second parameter set.

In a possible implementation, the configuration module 1330 may be further configured to:
determine, based on the road condition scenario, a preset drive control parameter set corresponding to the road condition scenario; and
perform configuration based on the determined preset drive control parameter set.

In a possible implementation, the vehicle control apparatus 1300 further includes:
a drive module, configured to: in response to a detected drive operation of a user, perform drive control based on the configured preset drive control parameter set.

In a possible implementation, the drive module is further configured to: when a vehicle travels on a first road surface, determine that the vehicle is to travel onto a second road surface from the first road surface;
in response to the detected drive operation of the user, perform braking control based on a first parameter set, where the first parameter set is a preset drive control parameter set configured when the vehicle travels on the first road surface;
determine a second parameter set, where the second parameter set is a preset drive control parameter set configured when the vehicle travels on the second road surface;
in response to detecting that the vehicle travels to a joint between the first road surface and the second road surface, switch from the first parameter set to the second parameter set; and
perform drive control based on the second parameter set.

The foregoing descriptions about implementations allow a person skilled in the art to understand that, for the purpose of convenient and brief descriptions, division of the foregoing functional modules is merely taken as an example for illustration. During actual application, the foregoing functions may be allocated to different functional modules and implemented as required. In other words, an inner structure of an apparatus is divided into different functional modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of software functional unit.

When the integrated unit is implemented in the form of software functional unit and sold or used as an independent product, the integrated unit may be stored in a computer-readable storage medium. Based on such an understanding, the technical solutions of embodiments of this application essentially, or the part contributing to the conventional technology, or all or some of the technical solutions may be implemented in a form of software product. The computer software product is stored in a storage medium and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A vehicle control method, applied to a vehicle, wherein the method comprises:
collecting control-related information;
determining a road condition scenario based on the control-related information;
determining, based on the road condition scenario, a preset braking control parameter set corresponding to the road condition scenario; and
performing configuration based on the determined preset braking control parameter set.

2. The method according to claim 1, wherein after the determining a road condition scenario based on the control-related information, the method further comprises:
sending a first information prompt based on the road condition scenario, wherein the first information prompt is used to prompt a user with the identified road condition scenario.

3. The method according to claim 1 or 2, wherein after the performing configuration based on the determined preset braking control parameter set, the method further comprises:
sending a second information prompt, wherein the second information prompt is used to inform the user that the configuration of the preset braking control parameter set determined based on the road condition scenario has taken effect.

4. The method according to claim 1, wherein the determining a road condition scenario based on the control-related information comprises:
obtaining control-related information of a plurality of channels, wherein each channel comprises control-related information corresponding to the channel; and
determining the road condition scenario based on the control-related information of the plurality of channels.

5. The method according to claim 4, wherein the control-related information comprises one or more of weather information, traffic information, road surface information, vehicle body interior information, and vehicle information.

6. The method according to any one of claims 1 to 5, wherein the performing configuration based on the determined preset braking control parameter set comprises:
in response to a detected braking operation of the user, performing configuration based on the determined preset braking control parameter set; and
after the performing configuration based on the determined preset braking control parameter set, the method further comprises:
performing braking control based on the configured preset braking control parameter set.

7. The method according to any one of claims 1 to 5, wherein after the performing configuration based on the determined preset braking control parameter set, the method further comprises:
in response to a detected braking operation of the user, performing braking control based on the configured preset braking control parameter set.

8. The method according to any one of claims 1 to 7, wherein the vehicle travels on a first road surface, and the method further comprises:
determining that the vehicle is to travel onto a second road surface from the first road surface;
in response to the detected braking operation of the user, performing braking control based on a first parameter set, wherein the first parameter set is a preset braking control parameter set configured when the vehicle travels on the first road surface;
determining a second parameter set, wherein the second parameter set is a preset braking control parameter set configured when the vehicle travels on the second road surface;
in response to detecting that the vehicle travels to a joint between the first road surface and the second road surface, switching from the first parameter set to the second parameter set; and
performing braking control based on the second parameter set.

9. The method according to claim 1, wherein the method further comprises:
determining, based on the road condition scenario, a preset drive control parameter set corresponding to the road condition scenario; and
performing configuration based on the determined preset drive control parameter set.

10. The method according to claim 9, wherein the method further comprises:
in response to a detected drive operation of a user, performing drive control based on the configured preset drive control parameter set.

11. The method according to claim 9 or 10, wherein the vehicle travels on a first road surface, and the method further comprises:
determining that the vehicle is to travel onto a second road surface from the first road surface;
in response to the detected drive operation of the user, performing braking control based on a first parameter set, wherein the first parameter set is a preset drive control parameter set configured when the vehicle travels on the first road surface;
determining a second parameter set, wherein the second parameter set is a preset drive control parameter set configured when the vehicle travels on the second road surface;
in response to detecting that the vehicle travels to a joint between the first road surface and the second road surface, switching from the first parameter set to the second parameter set; and
performing drive control based on the second parameter set.

12. A vehicle control apparatus, comprising:
a collection module, configured to collect control-related information;
a determining module, configured to: determine a road condition scenario based on the control-related information; and determine, based on the road condition scenario, a preset braking control parameter set corresponding to the road condition scenario; and
a configuration module, configured to perform configuration based on the determined preset braking control parameter set.

13. A vehicle, comprising a processor and a memory, wherein the memory is configured to store a computer program, and the processor is configured to run the computer program, to implement the vehicle control method according to any one of claims 1 to 11.

14. A computer-readable storage medium, comprising computer instructions, wherein when the computer instructions are run on the vehicle, the vehicle is enabled to perform the vehicle control method according to any one of claims 1 to 11.
